(19) Europäisches Patentamt
European Patent Office
Office européen des brevets

(11) **EP 2 131 207 A2**

(12) **EUROPÄISCHE PATENTANMELDUNG**

(43) Veröffentlichungstag:
**09.12.2009 Patentblatt 2009/50**

(51) Int Cl.:
**G01S 5/02** (2006.01)  **G01S 13/86** (2006.01)
**G01S 17/02** (2006.01)

(21) Anmeldenummer: **09007292.7**

(22) Anmeldetag: **02.06.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **02.06.2008 DE 102008026274**

(71) Anmelder: **Deutsches Zentrum für Luft- und Raumfahrt e.V. (DLR) 51147 Köln (DE)**

(72) Erfinder:
• **Röckl, Matthias**
**81549 München (DE)**
• **Gacnik, Jan**
**38114 Braunschweig (DE)**
• **Schomerus, Jan**
**38100 Braunschweig (DE)**

(74) Vertreter: **Gerstein, Hans Joachim et al Gramm, Lins & Partner GbR Freundallee 13 30173 Hannover (DE)**

(54) **Verfahren und Vorrichtung zum Bestimmen der Relativposition von bewegten Objekten**

(57) Es wird ein Verfahren zum Bestimmen einer Relativposition zwischen einem Egoobjekt (1) und einem Zielobjekt (2) vorgestellt, das insbesondere bei bewegten Fahrzeugen angewendet werden kann. Das Verfahren weist folgende Schritte auf:
a) Bestimmen einer autonomen Relativposition des Zielobjektes (2);
b) Suchen nach einer von dem Zielobjekt (2) ausgesendeten Information über die Position des Zielobjektes (2);
c) Wenn die Information des Zielobjektes (2) detektiert wird:
i) Bestimmen einer kooperativen Relativposition des Zielobjektes (2) aus der Information;
ii) Bestimmen der Relativposition des Zielobjektes (2) aus einer Fusion der autonomen Relativposition und der kooperativen Relativposition;

d) Wenn die Information des Zielobjektes (2) nicht detektiert wird: Bestimmen der Relativposition aus der autonomen Relativposition.

Fig. 1

Printed by Jouve, 75001 PARIS (FR)

**Beschreibung**

Die Erfindung betrifft ein Verfahren und eine Vorrichtung zum Bestimmen der Relativposition von bewegten Objekten, insbesondere von bewegten Fahrzeugen.

Es gibt viele Anwendungen, für die die Relativposition eines Objektes (im Folgenden Zielobjekt genannt) in Bezug auf ein weiteres Objekt (im Folgenden Egoobjekt genannt) benötigt wird. Beispielsweise gibt es Fahrerassistenzsysteme, bei denen die Relativposition zwischen zwei Fahrzeugen bekannt sein muss. Ein weiteres Beispiel kommt aus der Robotik. Dort wird die Relativposition zwischen in einem Roboterarm und einem zu bearbeitenden Objekt benötigt, um den Roboter richtig steuern zu können.

Die Relativposition lässt sich beispielsweise durch einen Vektor zwischen dem Zielobjekt und dem Egoobjekt angeben. Der Vektor wird durch eine Länge (Distanz zwischen den Objekten) und eine Orientierung (Winkel zu einer Referenzlinie) charakterisiert. Die für die Relativposition benötigten Daten können von jedem geeigneten Referenzsystem (affines oder krummliniges Koordinatensystem) abgeleitet werden. Es gibt lokale Referenzsysteme, die mit dem Egoobjekt verbunden sind. Ferner gibt es globale Referenzsysteme, wie beispielsweise das World Geodetic System 1984 (WGS 84, Geodätisches Weltsystem, 1984). Das WGS 84 ist ein dreidimensionales Koordinatensystem zur Positionsangabe auf der Erde und wird beispielsweise von Satellitenortungssystemen verwendet.

Es sind unterschiedliche Verfahren zur Bestimmung der Relativposition zwischen einem Zielobjekt und einem Egoobjekt bekannt.

Man unterscheidet autonome Verfahren und kooperative Verfahren.

Autonome Verfahren zum Bestimmen der Relativposition zwischen dem Zielobjekt und dem Egoobjekt sind Verfahren, bei denen das Egoobjekt ohne aktive Unterstützung des Zielobjektes die Relativposition zwischen den beiden Objekten bestimmt. Gängige Verfahren zur autonomen Bestimmung der Relativposition beruhen auf einer Laufzeitmessung von Signalen mit bekannter Geschwindigkeit, insbesondere von elektromagnetischen oder akustischen Signalen. Auf der Laufzeitmessung von Signalen mit bekannter Geschwindigkeit beruhen beispielsweise Radio Detection and Ranging (Radar), Light Detection and Ranging (Lidar) und Sound Navigation and Ranging (Sonar).

Bei den autonomen Verfahren wird zwischen monostatischen und multistatischen Verfahren unterschieden. Die monostatische Bestimmung der Relativposition basiert auf der Laufzeitmessung von Signalen, die von dem Egoobjekt ausgesendet, von dem Zielobjekt reflektiert und von dem Egoobjekt wieder empfangen werden.

Bei den multistatischen Verfahren werden Laufzeitmessungen von Signalen durchgeführt, die nicht ausschließlich von dem Egoobjekt ausgesendet werden. Beispielsweise werden von stationären Sendestationen, deren Positionen bekannt sind, zusätzlich Signale ausgesendet.

Als kooperative Verfahren zur Bestimmung der Relativposition zwischen dem Egoobjekt und dem Zielobjekt werden Verfahren bezeichnet, bei denen das Zielobjekt aktiv in die Bestimmung der Relativposition eingebunden ist. Das Zielobjekt sendet Signale aus, die Informationen zur Position des Zielobjektes enthalten. Diese Signale können von dem Egoobjekt empfangen werden. Das Egoobjekt extrahiert die Informationen und benutzt die so von dem Zielobjekt auf das Egoobjekt übertragene Information zur Position des Zielobjektes für die Bestimmung der Relativposition zwischen den Objekten. Bei den Informationen kann es sich um Positionsinformatlonen zu einem Referenzpunkt handeln, der sowohl dem Egoobjekt als auch dem Zielobjekt bekannt ist. Hierzu kann beispielsweise das bereits genannte WGS 84 dienen. Die DE 60 2005 000 335 T2 beschreibt eine Vorrichtung, bei der die relative Position zwischen zwei Fahrzeugen mit einem kooperativen Verfahren bestimmt wird.

Nachteile autonomer Verfahren ergeben sich aus dem begrenzten Ausleuchtungswinkel der Systeme. Der Ausleuchtungswlnkel wird einerseits durch physikalische Baugrößen beschränkt. Andererseits wird der Ausleuchtungswinkel bewusst eingeschränkt, um Störeinflüsse, wie beispielsweise Reflektionen von anderen Fahrzeugen, zu reduzieren. Durch den begrenzten Ausleuchtungswinkel können Zielobjekte, die sich außerhalb des Ausleuchtungswinkels befinden, nicht detektiert und demzufolge auch keine Relativposition dieses Zielobjektes zu dem Egoobjekt bestimmt werden. Dies trifft beispielsweise bei Kurvenfahrten von Fahrzeugen auf. Des Weiteren werden die Sendeleistung und somit auch die Reichweite (etwa 100 bis 150 m) dieser Verfahren in der Regel manuell beschränkt, um wiederum Störeinflüsse zu reduzieren. Darüber hinaus ist die Beschränkung der Sendeleistung erforderlich, um nicht andere Systeme in der Umgebung zu stören.

Ein weiterer Nachteil besteht in Messfehlern, die bei der Bestimmung der Relativposition entstehen. Messfehler entstehen insbesondere durch Beugung, Streuung und unerwünschte Reflektion an Objekten. Die Messfehler hängen des Weiteren von verschiedenen Umwelteinflüssen ab, beispielsweise vom Wetter (Regen, Schnee, Nebel usw.), dem Vorhandensein von weiteren gleichartigen Verfahren zum Bestimmen von relativen Positionen, die zu einer Überlagerung der Signale führt, sowie jegliche Art von Reflektoren (beispielsweise Leitplanken, Lärmschutzwände). Das Auflösungsvermögen wird auch durch Antennencharakteristiken begrenzt und eine Auflösung benachbarter Zielobjekte in einer bestimmten Entfernung nicht mehr ermöglicht.

Nachteile kooperativer Verfahren ergeben sich beispielsweise aus Fehlern, die bei globalen Navigationssatellitensystemen (GNSS, Global Navigation Satellite System) durch Störeinflüsse, wie beispielsweise ionosphärische und troposphärische Refraktion, Satellitenbahnfehler, Uhrenfehler der Satelliten und Empfänger sowie Multipfadfehlern durch Reflektionen an Hindernissen (beispielsweise Gebäuden, Böden) entstehen. Auch bei der Übertragung der Positionsinformationen können Fehler auftreten, insbesondere durch Nachrichtenkollisionen bei unbestätigtem Broadcast mit WLAN-Netzen (WLAN, Wireless Local Area Network).

Aufgabe der vorliegenden Erfindung ist es daher, ein verbessertes Verfahren sowie eine verbesserte Vorrichtung zum Bestimmen der Relativposition zwischen einem Egoobjekt und einem Zielobjekt bereitzustellen.

Die Aufgabe wird gelöst durch ein Verfahren mit den Merkmalen von Anspruch 1 sowie eine Vorrichtung mit den Merkmalen von Anspruch 15.

Vorteilhafte Ausführungsformen sind in den Unteransprüchen dargestellt.

Die Erfindung stellt ein hybrides Verfahren aus autonomer und kooperativer Bestimmung der Relativposition zwischen dem Egoobjekt und dem Zielobjekt bereit. Die durch das autonome Verfahren und das kooperative Verfahren ermittelten Relativpositionen werden mittels eines geeigneten Fusionsalgorithmus miteinander verknüpft. Aus dieser Verknüpfung wird die Relativposition zwischen dem Egoobjekt und dem Zielobjekt bestimmt. Durch das erfindungsgemäße hybride Verfahren werden die Verlässlichkeit und die Genauigkeit der Bestimmung der Relativposition verbessert, insbesondere wird die Detektionsrate von Zielobjekten erhöht und die Messfehler gegenüber den einzelnen Verfahren reduziert.

Das erfindungsgemäße Verfahren führt zudem zu einer verbesserten Separierung von mehreren Zielobjekten. Befinden sich beispielsweise zwei Zielobjekte derart nah, dass sie mit einem autonomen Verfahren nicht mehr separiert, d.h. aufgelöst, werden können, lassen sie sich dennoch mit Hilfe der von diesen Zielobjekten ausgesendeten Positionsinformationen voneinander separieren.

Darüber hinaus wird auch die Genauigkeit der Bestimmung der Relativposition erhöht. Die Fehler von autonomen Verfahren und kooperativen Verfahren sind größtenteils unkorreliert. Beispielsweise steigt die Fehlerwahrscheinlichkeit autonomer Systeme bei steigender Distanz zwischen Egoobjekt und Zielobjekt an, wohingegen dieser Fehler bei kooperativen Systemen im Wesentlichen unabhängig von der Distanz zwischen dem Egoobjekt und dem Zielobjekt ist. Dies ermöglicht eine genauere Bestimmung der Relativposition bei größeren Distanzen. Bei geringeren Distanzen kann durch autonome Bestimmung der Relativposition eine höhere Genauigkeit erzielt werden als bei der ausschließlichen Nutzung kooperativer Verfahren. Schließlich weisen autonome Systeme meistens eine erhöhte Ungenauigkeit durch Wettereinflüsse und dergleichen auf. Kooperative Verfahren zeigen sich diesbezüglich weniger anfällig.

Die autonome Relativposition und die kooperative Relativposition werden mittels eines geeigneten Fusionsalgorithmus miteinander verknüpft, beispielsweise durch eine gewichtete Summe.

Das erfindungsgemäße Verfahren sowie die erfindungsgemäße Vorrichtung können vielfältig eingesetzt werden. Einige Beispiele seien im Folgenden genannt:

Bei aktiven Sicherheitssystemen für Straßenfahrzeuge:

- automatische Abstandswarnung bei Unterschreitung des Mindestabstands zum Folgefahrzeug;
- Anwendungen zur Kollisionsvermeidung für Frontal-/Auffahr-/Flanken-Kollisionen.

Anwendungen zur Steigerung der Effizienz im Straßenverkehr:

- automatisches Folgefahren;
- Spurwechselassistenz.

Anwendungen zur Erhöhung des Fahrkomforts:

- automatische Longitudinalsteuerung (adaptive cruise control);
- automatische Scheinwerfereinstellung (automatic glare reduction).

Nachrichten-Verteilungs-Strategien:

- geobasiertes Nachrichtenrouting.

Die autonome Relativposition kann sowohl mit einem monostatischen als auch mit einem multistatischen Verfahren bestimmt werden. Dabei werden Signalveränderungen oder Signalcharakteristiken untersucht. Beispielsweise basieren diese Verfahren auf Laufzeitmessungen von Signalen, insbesondere von elektromagnetischen (inklusive optischen) oder akustischen Signalen. Hierbei können bekannte Techniken eingesetzt werden, beispielsweise Radar, Lidar oder Sonar. Die Genauigkeit lässt sich erhöhen, wenn eine Kombination dieser Techniken eingesetzt wird. Denkbar ist auch, Phasenänderungen oder Schwächungen der Signale (englisch Signal Attenuation) zu untersuchen und aus ihnen die autonome Relativposition zu bestimmen. Vorteilhaft werden verschiedene Signale für die Bestimmung der autonomen Relativposition eingesetzt werden, beispielsweise Radar und Lidar. So lassen sich Fehler in der Bestimmung der autonomen Relativposition verringern, da sich die Genauigkeiten der einzelnen Techniken räumlich voneinander unterscheiden.

Wird ein globales Referenzsystem verwendet, ist es erforderlich, die Eigenlage (Position des Objektes in dem globalen Referenzsystem) des Egoobjektes zu bestimmen. Die Eigenlage kann beispielsweise mittels einer Satellitenortung bestimmt werden. Eine geeignete Satellitenortung basiert auf dem Global Positioning System (GPS).

Die für die Positionsinformationen des Zielobjektes erforderliche Eigenlage kann ebenfalls mittels Satellitenortung bestimmt werden.

Die Eigenposition des Zielobjektes lässt sich auch aus Rohdaten der Eigenposition des Zielobjektes ableiten, so dass die Positionsinformationen nur diese Rohdaten zu enthalten brauchen. Bei diesen Rohdaten handelt es sich beispielsweise um Abstände des Zielobjektes zu mindestens drei Satelliten sowie Identifikationsnummern dieser Satelliten. Aus diesen Rohdaten kann die Eigenposition des Zielobjektes berechnet werden. Dieses Verfahren wird auch GPS-Relativpositionsbestimmung genannt. Die Zuverlässigkeit wird erhöht, wenn mehr als drei Satelliten berücksichtigt werden, beispielsweise sechs. Dadurch lässt sich die kooperative Relativposition zwischen dem Egoobjekt und dem Zielobjekt auch dann noch bestimmen, wenn die beiden Objekte nicht dieselben Satelliten benutzen verwenden, beispielsweise weil einige Satelliten für eines dieser Objekte nicht "gesehen" wird.

Vorzugsweise wird die Information über die Position des Zielobjektes drahtlos ausgesendet. Zweckmäßig wird hierfür ein Rundstrahler verwendet, der die Lageinformation in einen möglichst großen Raumwinkel aussendet. Dies hat den Vorteil, dass diese Information von vielen verschiedenen Positionen aus empfangen werden kann. Vorzugsweise wird die Information periodisch ausgesendet, beispielsweise mit einer Frequenz von etwa 10 Hz.

Bevorzugte Ausführungsformen wenden eine sogenannte Multi-Hop-Strategie an. Hop nennt man in Netzen den Weg von einem Netzknoten zum nächsten. Von einer Multi-Hop-Verbindung spricht man, wenn Pakete (beispielsweise Informationen) über mehrere Zwischenstationen weitergegeben werden. Vorliegend kann man sich unter den Netzknoten verschiedene Zielobjekte vorstellen. Die Positionsinformation eines bestimmten Zielobjektes wird dann über ein oder mehrere weitere Zielobjekte auf das Egoobjekt übertragen. Dies ermöglicht eine Detektion in alle Richtungen und über die Grenzen der autonomen Verfahren hinweg. Auch Hindernisse, die bei autonomen Systemen eine Detektion des Zielobjektes verhindern, können mittels einer Multi-Hop-Strategie im Rahmen des kooperativen Verfahrens überwunden werden. Dies ermöglicht eine weit reichende Detektion von Zielobjekten, die durch andere Zielobjekte für die autonome Bestimmung der Relativposition abgeschattet sind oder außerhalb des Ausleuchtungsberelchs liegen (beispielsweise bei Kurvenfahrten). Die Zielobjekte, die Informationen anderer Zielobjekte weiter übertragen, weisen hierzu geeignete Einrichtungen auf, wie zum Beispiel einen Empfänger.

Erfindungsgemäß ist vorgesehen, dass die autonome Relativposition und die kooperative Relativposition anhand von a-priori festgelegten Gewichtungen miteinander fusioniert werden.

Es ist auch möglich, die autonome Relativposition und die kooperative Relativposition anhand von bei der Bestimmung generierten Gewichten miteinander zu fusionieren. Beispielsweise kann einer durch GPS bestimmten Position bei einem niedrigen HDOP-Faktor (Horizontal Dilution of Precision) ein geringeres Gewicht zugeordnet werden. Der HDOP-Faktor ist ein Maß für den Positionsfehler in der Horizontalebene. Er wird von der Konstellation der Satelliten gegenüber dem Standort des Objektes bestimmt.

Erfindungsgemäß ist ferner vorgesehen, dass gleichzeitig mehrere gewichtete Hypothesen über mögliche Positionen des Zielobjektes mitgeführt werden. Dabei werden mehrere mögliche nächste Positionen des Zielobjektes geschätzt. Den einzelnen Hypothesen lassen sich gegebenenfalls verschiedene Gewichtsfaktoren zuordnen. Vorteilhaft hieran ist, dass das erfindungsgemäße Verfahren auch mit einzelnen fehlerhaften Messungen zu brauchbaren Ergebnissen führt.

Mit der vorliegenden Erfindung lässt sich auch ein Folgemodell für eine dynamische Objektsverfolgung realisieren. Hierzu werden die Relativpositionen eines oder mehrerer Zielobjekte zu verschiedenen Zeitpunkten bestimmt. Hierdurch erhält man eine Folge von Relativpositionen, die die Dynamik des Zielobjektes beziehungsweise der Zielobjekte beschreibt. Vorzugsweise werden die Relativpositionen periodisch bestimmt.

Für Folgemodelle kann es sinnvoll sein, eine autonome relative Geschwindigkeit des Zielobjektes zu bestimmen, um eine zu erwartende Relativposition genauer schätzen zu können.

Für Dynamikmodelle ist es zweckmäßig, Kausalzusammenhänge in der Folge der Relativpositlonen für eine Schätzung einer Hypothese für eine nächste Relativposition des Zielobjektes hinzuzuziehen, um die Schätzung zu verbessern. Kausalzusammenhänge ergeben sich beispielsweise aus erwartenden Richtungsänderungen, Geschwindigkeiten und/oder zu erwarteten Beschleunigungsänderungen ausgesendet werden. Eine erwartete Richtungsänderung lassen sich etwa aus einer Drehung des Lenkrades ableiten. Die zu erwartende Richtungsänderung kann bereits vor dem tatsächlichen Drehen der Räder des Fahrzeugs für eine Schätzung der nächsten Relativposition verwendet werden. Zu erwartende Beschleunigungsänderungen lassen sich beispielsweise aus dem Betätigen des Gaspedals oder des Bremspedals ableiten. Durch die Berücksichtigung dieser Änderungen kann die Genauigkeit eines Folgemodells erhöht werden.

Weiterhin kann es sinnvoll sein, wenn Werte für Modellparameter eines dynamischen Folgemodells des Zielobjektes von diesem übertragen werden. Verfahren, die auf Grund periodischer Messungen die Position und den Bewegungszustand eines Objektes schätzen, verwenden häufig ein dynamisches Folgemodell des Objektes, um zum Beispiel die Plausibilität der Messungen zu prüfen und stark abweichende Messwerte gegebenenfalls nicht zu berücksichtigen. Die Komplexität derartiger Folgemodelle reicht vom masselosen Punkt mit als stets gleichförmig angenommener Bewegung bis hin zu komplexen dynamischen Folgemodellen, die zum Beispiel bei Straßenfahrzeugen Modellparameter wie Masse, Motorleistung, Bremskraft, Fahrwerksgeometrie, Reibwert der Reifen, etc. berücksichtigen. Derartige Modelle ermöglichen eine umso genauere Schätzung der Bewegung des Zielobjektes, je besser die Modellparameter bekannt sind.

Messungen sind fehlerbehaftet und stellen Zufallsexperimente dar. Die Messgrößen, beispielsweise die Relativposition, stellen dementsprechend Zufallsgrößen dar, die einer Wahrscheinlichkeitsverteilung unterliegen. Die Wahrscheinlichkeitsverteilung ist oftmals nicht oder nicht genau bekannt. Aus diesem Grunde ist es vorteilhaft, aus der Folge von Relativpositionen des Zielobjektes ein Fehlermodell für die Bestimmung der Relativposition des Zielobjektes zu schätzen. Wird eine Normalverteilung zugrunde gelegt, lassen sich aus der Folge von Relativpositionen die relevanten Parameter (Erwartungswert, Standardabweichung) schätzen. Es gibt jedoch auch Situationen, bei denen die Annahme einer Normalverteilung nicht zu brauchbaren Ergebnissen führt. In diesem Fall ist es für die Genauigkeit des Folgemodells sinnvoll, die Wahrscheinlichkeitsverteilung aus der Folge von Relativpositionen zu schätzen und bei späteren Messungen zugrunde zu legen. Vorzugsweise wird die Wahrscheinlichkeitsverteilung durch weitere Messungen rekursiv verbessert.

Darüber hinaus kann das so ermittelte Fehlermodell bei der Bestimmung der Relativposition weiterer Zielobjekte verwendet werden.

Bei nichtlinearen Folgemodellen mit rückgekoppelten Regelsteuerungen kann vorteilhaft ein Partikelfilter eingesetzt werden. Als minimale Schätzgröße dient beispielsweise die Distanz zum Zielobjekt, die von dem verwendeten lokalen Referenzsystem abhängt. Für ein zweidimensionales kartesisches Koordinatensystem ergeben sich für jedes Zielobjekt mindestens zwei Schätzgrößen: die Distanz in Longitudinalrichtung und in Lateralrichtung in Bezug auf eine ausgezeichnete Richtung, beispielsweise der Fahrrichtung des Egoobjektes. Aus den Messwerten der autonomen und kooperativen Relativpositionen lassen sich die beiden Schätzgrößen durch einen geeigneten Fusionsalgorithmus ableiten.

Für eine höhere Genauigkeit und eine geringere Verzögerung können zusätzliche Messgrößen zur Parametrisierung der Bewegungs- und Sensormodelle herangezogen werden. Diese zusätzlichen Messgrößen werden durch kooperative und/oder autonome Verfahren bereitgestellt. Eine geeignete Messgröße ist die Geschwindigkeit des Zielobjektes, die sowohl von autonomen als auch von kooperativen Systemen bestimmt werden kann. Weitere Informationen, wie beispielsweise zu erwartende Richtungsänderungen oder zu erwartende Beschleunigungsänderungen lassen mittels kooperativer Verfahren berücksichtigen.

Die erfindungsgemäße Vorrichtung weist wenigstens folgende Merkmale auf: eine an dem Egoobjekt angeordnete Einrichtung zum Bestimmen einer autonomen Lage des Zielobjektes; eine an dem Egoobjekt angeordnete Einrichtung zum Bestimmen einer kooperativen Lage des Zielobjektes; eine Einrichtung zum Bestimmen der Relativposition des Zielobjektes in Abhängigkeit von autonomen Lagen des Zielobjektes und der kooperativen Lage des Zielobjektes.

Um die kooperative Lage des Zielobjektes zu bestimmen, ist es erforderlich, dass das Zielobjekt eine geeignete Einrichtung aufweist, die Position des Zielobjektes auf das Egoobjekt zu übertragen. Hierzu sind in der Regel eine Einrichtung zur Selbstlokalisation (etwa ein GPS-Empfänger) und eine Sendeanlage erforderlich.

Wird die autonome Lage mit einem multistatischen Verfahren ermittelt, ist zusätzlich eine geeignete Einrichtung außerhalb des Zielobjektes und des Egoobjektes erforderlich.

Das erfindungsgemäße Verfahren sowie die erfindungsgemäße Vorrichtung können auch dann eingesetzt werden, wenn die Bestimmung der kooperativen Relativposition nicht möglich ist, beispielsweise weil Kommunikationsfehler vorhanden sind, eine Eigenlokalisation des Zielobjektes fehlschlägt oder das Zielobjekt nicht über eine entsprechende Einrichtung zur Eigenlokalisation verfügt. In diesem Fall wird die Relativposition allein aus der autonomen Relativposition abgeleitet. Im einfachsten Fall wird die autonome Relativposition als Relativposition verwendet.

Die Erfindung wird anhand des in der nachfolgenden Figur dargestellten Ausführungsbeispiels näher erläutert.

Es zeigt:

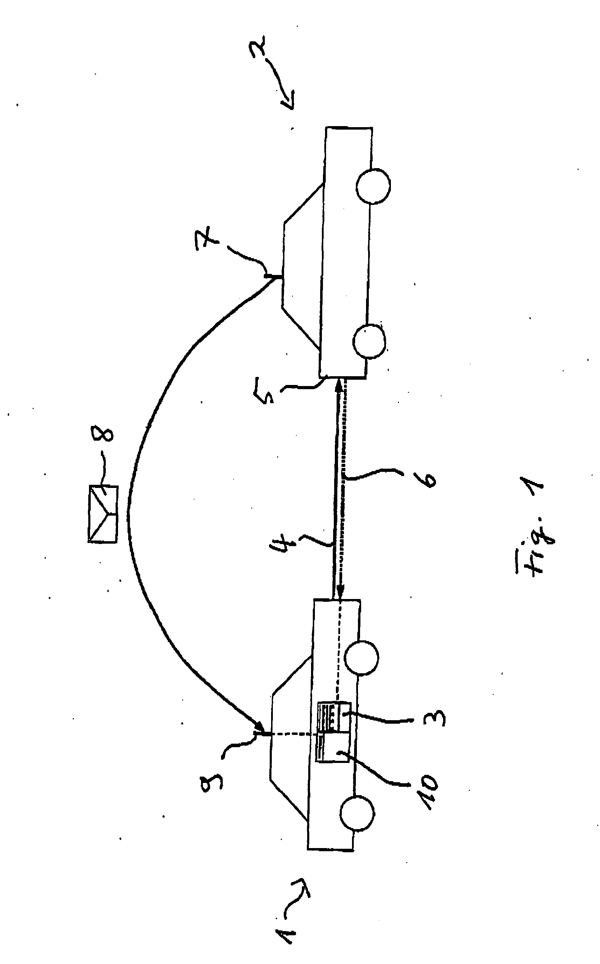

Figur 1 -    eine Ausführungsform der erfindungsgemäßen Vorrichtung.

In Figur 1 sind zwei Fahrzeuge gezeigt, von denen eines ein Egoobjekt 1 und das andere ein Zielobjekt 2 darstellen.

Das Egoobjekt 1 weist eine Einrichtung 3 zum Bestimmen einer autonomen Lage des Zielobjektes 2 auf.

Die Einrichtung 3 ermittelt eine autonome Relativposition des Zielobjektes 2 mit Hilfe eines Radars. Hierzu wird ein elektromagnetisches Signal 4 ausgesendet. Das Signal 4 wird von einer Oberfläche 5 des Zielobjektes 2 reflektiert. Aufgrund der Reflektion wird ein reflektiertes Signal 6 zurückgeworfen.

Das reflektierte Signal 6 wird von der Einrichtung 3 empfangen. Hierzu ist die Einrichtung 3 mit einer nicht dargestellten geeigneten Empfangsantenne verbunden oder ausgestattet. Aus der bekannten Ausbreitungsgeschwindigkeit des Signals 4 und des reflektierten Signals 6 sowie der gemessen Zeit zwischen dem Aussenden des Signals 4 und dem Empfangen des reflektierten Signals 6 kann eine Distanz zwischen dem Egoobjekt 1 und dem Zielobjekt 2 ermittelt werden.

Zusätzlich zur Distanz kann auch eine Richtungsinformation von dem Egoobjekt 1 zu dem Zielobjekt 2 ermittelt werden. Hierzu wird ein Winkel zwischen der Verbindungslinie von dem Egoobjekt 1 zu dem Zielobjekt 2 und einer nicht dargestellten Referenzlinie bestimmt. Hierzu weist die Einrichtung 3 beispielsweise einen Kompass auf, mit dem die Richtung ermittelt wird, in der das Signal 4 ausgesendet wird. Um die gesamte Umgebung des Egoobjektes 1 zu erfassen, wird das Signal 4 zeitlich nacheinander in die verschiedenen Richtungen ausgesendet.

Das Zielobjekt 2 weist eine nicht dargestellte Einrichtung auf, mit der das Zielobjekt 2 seine eigene Position bestimmen kann. Beispielsweise wird hierzu eine Satellitenortung verwendet. Dazu ist das Zielobjekt 2 mit einem geeigneten Satellitenempfänger, beispielsweise einem GPS-Empfänger, und einer geeigneten Auswerteeinrichtung ausgestattet.

Das Zielobjekt 2 weist ferner eine geeignete Einrichtung auf, mit der diese Informationen über eine Antenne 7 ausgesendet werden. Über die Antenne 7 wird die Fahrzeugposition (etwa die Koordinaten in dem WGS-84 Koordinatensystem) mit Hilfe eines Rundstrahlers in alle Richtungen um die Antenne 7 ausgesendet.

Die Positionsinformation 8 wird über eine Antenne 9 an dem Egoobjekt 1 empfangen und an eine Auswerteeinrichtung 10 weitergeleitet. Die Auswerteeinrichtung 10 extrahiert die Positionsinformation 8. Das Egoobjekt 1 weist eine nicht dargestellte Einrichtung zum Bestimmen der eigenen Position auf. Diese ist vorliegend ebenfalls ein Satellitenortungssystem. Aus der Position des Egoobjektes 1 und der Position des Zielobjektes 2 kann eine kooperative Relativposition bestimmt werden.

In einer nicht dargestellten Recheneinheit wird eine Relativposition aus der kooperativen Relativposition und der autonomen Relativposition ermittelt.

Die Relativpositionen des Zielobjektes 2 werden periodisch ermittelt, um ein dynamisches Folgemodell zu realisieren.

Im Folgenden wird ein Fusionsalgorithmus näher erläutert, der besonders für dynamische Folgemodelle geeignet ist. Der Fusionsalgorithmus ist jedoch nicht auf die in Figur 1 dargestellte und hier beschriebene Ausführungsform der Erfindung beschränkt.

Der Fusionsalgorithmus ist ein zeitdiskreter, wertkontinuierlicher Algorithmus.

Unabhängig von den verwendeten Sensortypen sind die Messungen mit den Sensoren fehlerbehaftet. Daher soll der Fusionsalgorithmus geeignet sein, fehlerhafte (insbesondere verrauschte) Sensormessungen $z_{i}1:k$ der Sensoren $i = 1, ..., n$ über die Zeit $1:k$ (Der hochgestellte Index $1:k$ wird definiert als Zeitintervall von der Zeit 1 bis zu der Zeit k) zu filtern und die interessierenden Schätzgrößen $x_k$ zu der Zeit k adäquat abzuleiten. $x_k$ ist der geschätzte Zustand des Systems zur Zeit k und entspricht vorliegend der Relativposition zur Zeit k. Die Relativposition wird in einem zweidimensionalen kartesischen Koordinatensystem mit den Komponenten $x_k iat$ für die laterale Komponente und $x_k lon$ für die longitudinale Komponente, also $x_k = [x_k lat, x_k lon]$. Die Referenzrichtung für die Komponenten wird durch die Fahrtrichtung des Egoobjektes 1 festgelegt.

Der Zustand $x_k$ wird auf Basis eines Bayes'schen Modells aufgrund eines gegebenen Zustandes $z1:k$ rekursiv geschätzt. Der Schätzgrad wird durch die Wahrscheinlichkeitsdichtefunktion $p(x_k j z1:k)$ charakterisiert. Die Wahrscheinlichkeitsdichtefunktion kann mit einer Zwei-Phasen-Methode rekursiv erhalten werden. Die beiden Phasen sind: Voraussage und Aktualisierung.

Die Phase der Voraussage wird definiert durch folgende Vorschrift:

$$p\left(x^{k}\middle|z^{1:k-1}\right) = \int p\left(x^{k}\middle|x^{k-1}\right)p\left(x^{k-1}\middle|z^{1:k-1}\right)dx^{k-1}$$

Die Phase der Aktualisierung wird definiert durch die Vorschrift:

$$p\left(x^{k}\middle|z^{1:k}\right)=\frac{p\left(z^{k}\middle|x^{k}\right)p\left(x^{k}\middle|z^{1:k-1}\right)}{p\left(z^{k}\middle|z^{1:k-1}\right)}$$

Zum Lösen dieser Gleichungen können verschiedene Bayes'sche Filtertypen verwendet werden, beispielsweise Kalmanfilter und Partikelfilter. Partikelfilter zeichnen sich insbesondere dadurch aus, dass sie keine Gaußverteilung voraussetzen und auf nichtlineare Messungen und nichtlineare Modelle angewendet werden können.

Bei Partikelfiltern handelt es sich um sequenzielle Monte-Carlo-Methoden, bei denen die a-postperiori Wahrscheinlichkeitsverteilung einer Zustandsschätzung durch eine diskrete Stickprobe repräsentiert wird, deren Elemente Partikel genannt werden.

Vorliegend basiert der Fusionsalgorithmus auf einem Sample Importance Resampling (SIR) Algorithmus, der ein Spezialfall eines Sequential Importance Sampling (SIS) Algorithmus ist. Für jeden Zeitpunkt k wird die interessierende Variable xk durch einen Satz von m Partikeln {Skj, j = 1, ... m} und mit korrespondierenden Gewichten wkj, j = 1, ... m, repräsentiert.

**Patentansprüche**

1. Verfahren zum Bestimmen einer Relativposition mindestens eines Zielobjektes (2) in Bezug auf ein Egoobjekt (1) mit den Schritten:

   a) Bestimmen einer autonomen Relativposition des Zielobjektes (2);
   b) Suchen nach einer von dem Zielobjekt (2) ausgesendeten Information über die Position des Zielobjektes (2);
   c) Wenn die Information des Zielobjektes (2) detektiert wird:

   i) Bestimmen einer kooperativen Relativposition des Zielobjektes (2) aus der Information;
   ii) Bestimmen der Relativposition des Zielobjektes (2) aus einer Fusion der autonomen Relativposition und der kooperativen Relativposition;

   d) Wenn die Information des Zielobjektes (2) nicht detektiert wird: Bestimmen der Relativposition aus der autonomen Relativposition.

2. Verfahren nach Anspruch 1, **dadurch gekennzeichnet, dass** die autonome relative Position mit einem monostatischen oder multistatischen Verfahren, das insbesondere auf Signalveränderungen oder Signalcharakteristiken von Signalen, insbesondere elektromagnetischen oder akustischen Signalen, basiert, bestimmt wird.

3. Verfahren nach einem der vorstehenden Ansprüche, **dadurch gekennzeichnet, dass** eine Eigenposition des Egoobjekt (1) und/oder eine Eigenposition des Zielobjektes (2), insbesondere mittels einer Satellitenortung, bestimmt wird.

4. Verfahren nach Anspruch 3, **dadurch gekennzeichnet, dass** Rohdaten der Eigenposition des Zielobjektes (2) bestimmt werden, aus denen die Eigenposition des Zielobjektes (2) ableitbar ist.

5. Verfahren nach einem der vorstehenden Ansprüche, **dadurch gekennzeichnet, dass** die Positionsinformation des Zielobjektes (2), insbesondere mittels eines Rundstrahlers, drahtlos ausgesendet wird und/oder die Positionsinformation des Zielobjektes (2) über ein Multihop-Verfahren von dem Zielobjekt (2) auf das Egoobjekt (1) übertragen wird.

6. Verfahren nach einem der vorstehenden Ansprüche, **dadurch gekennzeichnet, dass** die autonome Relativposition und die kooperative Relativposition anhand von a-priori festgelegten Gewichtungen oder anhand von bei der Bestimmung generierten Gewichten miteinander fusioniert werden.

7. Verfahren nach einem der vorstehenden Ansprüche, **dadurch gekennzeichnet, dass** gleichzeitig mehrere gewichtete Hypothesen über mögliche Positionen des Zielobjektes mitgeführt werden.

8. Verfahren nach einem der vorstehenden Ansprüche, **dadurch gekennzeichnet, dass** das Verfahren wiederholt angewendet wird, um eine Folge von Relativpositionen zu erhalten, wobei wenigstens ein Kausalzusammenhang in der Folge der Relativpositionen für eine Schätzung einer Hypothese für eine nächste Relativposition des Zielobjektes (2) hinzugezogen wird.

9. Verfahren nach Anspruch 8, **dadurch gekennzeichnet, dass** eine autonome relative Geschwindigkeit des Zielobjektes (2) bestimmt wird.

10. Verfahren nach Anspruch 8 oder 9, **dadurch gekennzeichnet, dass** von dem Zielobjekt (2) Informationen zu erwartenden Richtungsänderungen, zu erwarteten Beschleunigungsänderungen, und/oder Informationen über Modellparameter ausgesendet werden.

11. Verfahren nach einem der Ansprüche 8 bis 10, **dadurch gekennzeichnet, dass** aus der Folge von Relativpositionen des Zielobjektes (2) ein Fehlermodell für die Bestimmung der Relativposition des Zielobjektes (2) geschätzt wird.

12. Verfahren nach einem der vorhergehenden Ansprüche, **dadurch gekennzeichnet, dass** Relationen in den Kausalzusammenhängen in den Folgen von Relativpositionen zwischen verschiedenen Zielobjekten ausgewertet werden.

13. Verfahren nach Anspruch 11 oder 12, **dadurch gekennzeichnet, dass** das Fehlermodell bei der Bestimmung der Relativposition eines weiteren Zielobjektes (2) verwendet wird.

14. Verfahren nach einem der Ansprüche 8 bis 13, **dadurch gekennzeichnet, dass** die relative Position aus der Folge der Relativpositionen mittels eines Partikelfilters geschätzt wird.

15. Vorrichtung zum Bestimmen einer Relativposition zwischen einem Egoobjekt (1) und einem Zielobjekt (2) nach einem Verfahren der vorstehenden Ansprüche, wobei die Vorrichtung aufweist:

    a) eine an dem Egoobjekt (1) angeordnete Einrichtung (3) zum Bestimmen einer autonomen Position des Zielobjektes (2);
    b) eine an dem Egoobjekt (1) angeordnete Einrichtung zum Bestimmen einer kooperativen Position des Zielobjektes (2);
    c) eine Einrichtung zum Bestimmen der Relativposition des Zielobjektes (2) aus einer Fusion der autonomen Position des Zielobjektes (2) und der kooperativen Position des Zielobjektes (2).

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 602005000335 T2